Europäisches Patentamt

European Patent Office

Office européen des brevets

(11) Numéro de publication: **0 051 519**
**B1**

(12) **FASCICULE DE BREVET EUROPEEN**

(45) Date de publication du fascicule du brevet:
**15.07.87**

(21) Numéro de dépôt: **81401660.6**

(22) Date de dépôt: **21.10.81**

(51) Int. Cl.⁴: **G 02 B 6/38**

(54) Embout pour connecteur de fibre optique et connecteur muni d'un tel embout.

(30) Priorité: **31.10.80 FR 8023391**

(43) Date de publication de la demande:
**12.05.82 Bulletin 82/19**

(45) Mention de la délivrance du brevet:
**15.07.87 Bulletin 87/29**

(84) Etats contractants désignés:
**BE DE GB IT NL SE**

(56) Documents cités:
**FR - A - 2 379 079**
**FR - A - 2 408 152**

**Le dossier contient des informations techniques présentées postérieurement au dépôt de la demande et ne figurant pas dans le présent fascicule.**

(73) Titulaire: **SOCAPEX, 10 bis, quai Léon Blum, F-92153 Suresnes (FR)**

(72) Inventeur: **Collignon, Roger, THOMSON-CSF SCPI 173, bld Haussmann, F-75360 Paris Cedex 08 (FR)**

(74) Mandataire: **Brullé, Jean et al, Service Brevets Bendix 44, rue François 1er, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un embout pour connecteur de fibres optiques, comportant au moins un manchon de centrage de forme sensiblement cylindrique dans lequel une fibre optique est fixée, ledit manchon de centrage possédant à son extrémité antérieure une face de contact où débouche la fibre et à proximité de son extrémité postérieure des moyens de positionnement du manchon de centrage dans l'embout, ainsi que des moyens d'orientation du manchon de centrage.

Elle concerne également les connecteurs munis d'un tel embout.

On connaît notamment par le brevet français A-2 379 079 un embout de connecteur de fibre optique rendu flottant pour permettre son accouplement avec un autre embout à l'aide d'un manchon d'alignement. Le brevet américain n° 4 193 664 décrit un autre type d'embout. Celui-ci a une forme sensiblement cylindrique avec deux pans coupés en forme de V qui s'appuie sur des surfaces complémentaires dans la partie femelle du connecteur. Afin d'ajuster l'alignement des deux fibres optiques à raccorder, cet embout possède également des vis de centrage de la fibre permettant un alignement de celle-ci.

Les connecteurs de fibres optiques réalisés avec de tels embouts présentent cependant un certain nombre d'inconvénients. Les embouts correspondants doivent être réalisés avec une très grande précision par usinage, ce qui conduit nécessairement à des coûts de fabrication élevés. De plus, après raccordement des embouts mâle et femelle, un alignement des fibres est nécessaire à l'aide de vis correspondantes afin d'obtenir une atténuation minimum des informations transmises par le connecteur. Une telle opération est nécessairement longue et fastidieuse. Enfin, de tels embouts ne peuvent être utilisés pour le raccordement simultané de plusieurs voies optiques. En effet, les très faibles tolérances d'ajustement nécessaires pour la connexion de deux embouts sont encore diminuées lorsque l'on veut assurer la connexion simultanée de plusieurs embouts, et il n'est pas possible actuellement de fabriquer des connecteurs de fibres optiques multi-voies utilisant ces embouts et ayant des performances acceptables.

Les embouts pour connecteurs de fibres optiques selon l'invention permettent d'éviter ces inconvénients.

En conséquence, la présente invention a pour objet un embout pour connecteur de fibres optiques portant au moins un manchon de centrage de forme sensiblement cylindrique, dans lequel une fibre optique est fixée, ledit manchon de centrage possédant à son extrémité antérieure une face de contact où débouche la fibre et à proximité de son extrémité postérieure des moyens de positionnement du manchon de centrage dans l'embout, ainsi que des moyens d'orientation du manchon de centrage, caractérisé en ce que lesdits moyens d'orientation du manchon de centrage sont constitués par un dispositif formant rotule disposée entre les moyens de positionnement du manchon de centrage et l'extrémité postérieure de l'embout, celui-ci permettant un pivotement du manchon à l'intérieur dudit embout, autour du point de pivotement du dispositif formant rotule.

De préférence, le dispositif formant rotule est constitué par une gorge circulaire creusée dans le manchon de centrage coopérant avec un joint torique logé dans celle-ci et s'appuyant sur le logement interne correspondant de l'embout.

Avec un tel embout, il n'est aucunement nécessaire d'utiliser des vis de réglage après connexion de celui-ci dans l'embout femelle correspondant. En effet, par pivotement autour du dispositif formant rotule, on constate un auto-alignement des fibres optiques à raccorder.

Par ailleurs, un tel embout présente l'avantage d'être étanche lorsque le joint torique utilisé est élastique, ce qui permet d'utiliser cet embout pour le raccordement de fibres optiques en milieu liquide. Il n'existe alors aucun risque de remontée du liquide dans la gaine du câble optique.

Pour assurer un jeu suffisant, afin de faciliter le raccordement, mais pas trop important, en particulier dans le cas de connecteurs multivoies, les moyens de positionnement qui sont disposés entre le dispositif formant rotule et l'extrémité antérieure de l'embout sont constitués par un disque muni d'un canal central, dont les deux surfaces de base extérieure et intérieure coopèrent respectivement avec les épaulements portés par l'embout du connecteur et le manchon de centrage qui y est logé, ledit disque étant fixé avec un jeu transversal dans l'embout tout en assurant le blocage en translation.

Dans la pratique, on a constaté que ces moyens de positionnement devaient avoir des dimensions telles que le pivotement du manchon de centrage autour du dispositif formant rotule se situait à l'intérieur d'un cône ayant un angle d'ouverture de l'ordre de 1°.

Pour assurer le raccordement d'un embout selon l'invention avec un autre embout de fibres optiques possédant un manchon de centrage de même forme que celui de l'embout selon l'invention, on utilisera de préférence un manchon d'accouplement tel que celui qui est décrit dans la demande de brevet français No. 80 06 613 au nom de la Demanderesse.

Si l'on désire que l'embout selon l'invention se présente sous la forme d'un embout femelle, il suffit de munir le manchon de centrage d'un manchon d'accouplement, tel que celui auquel il est fait référence ci-dessus. De préférence, ce manchon d'accouplement sera maintenu dans l'embout par des pièces rapportées fixées à celui-ci et évitant ainsi la désolidarisation desdits manchons.

L'invention sera mieux comprise à l'aide de la description suivante, donnée à titre non limitatif, conjointement avec les figures qui représentent:

– la figure 1, une vue en coupe d'un connecteur utilisant un embout selon l'invention, ce connecteur comportant deux parties A et B représentées sous forme déconnectée,

– la figure 2 qui représente le connecteur de la figure 1 en position connectée.

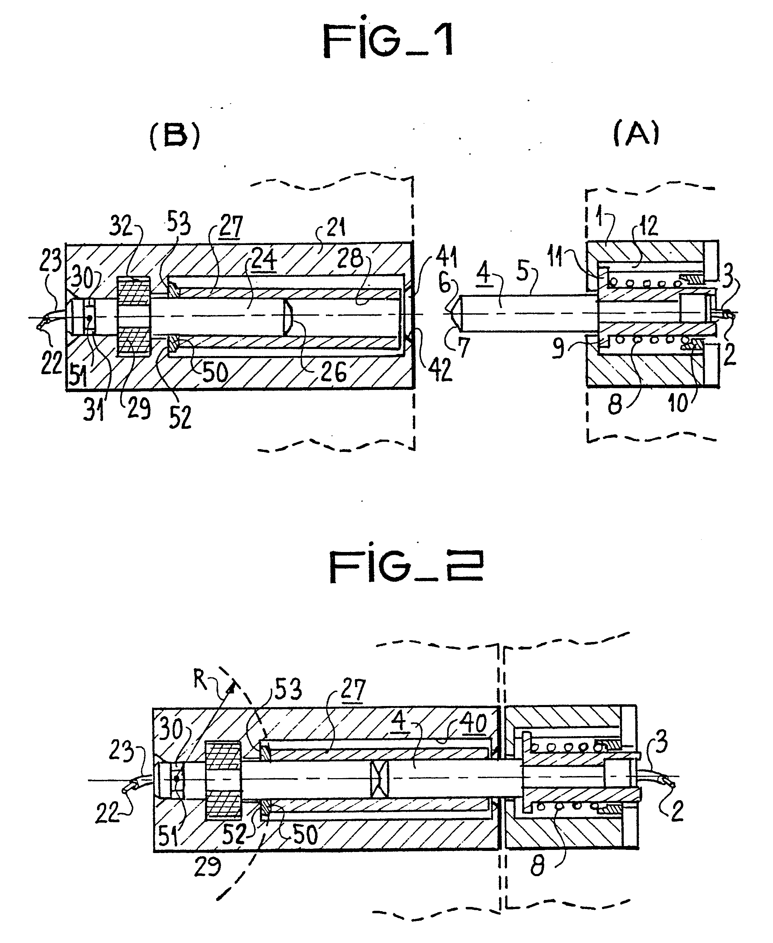

Sur la partie A du connecteur de la figure 1, une fibre 2, munie de sa gaine de protection 3, est logée dans le manchon cylindrique de centrage 4, percé d'un canal axial longitudinal, où elle est fixée après dénudage, par un moyen connu, tel qu'une colle polymérisable; cette fixation peut avantageusement avoir été faite en atelier, sur un dispositif de montage assurant la concentricité entre la fibre 2 et la surface extérieure cylindrique 5 du manchon de centrage 4 pendant la polymérisation.

A la partie antérieure du manchon de centrage débouche la face de contact 6 de la fibre, entourée d'un chanfrein 7 en forme de cône de révolution. L'ensemble du manchon peut se déplacer longitudinalement dans l'embout du connecteur 1 qui le supporte. Un ressort 8, disposé entre une collerette 9 qui lui est solidaire, et une bague 10 solidaire de l'embout, place le manchon 4 en position avancée. Enfin, un ergot 11, solidaire du manchon, coopérant avec une rainure 12 solidaire de l'embout, fixe de façon positive l'orientation angulaire de ce manchon dans celui-ci. L'ouverture du connecteur 1 à travers laquelle passe le manchon de centrage est de diamètre légèrement supérieur à celui-ci. Ceci permet un jeu latéral dudit manchon au cours de l'accouplement (déplacement vertical sur la figure).

La partie (A) décrite ci-dessus posséde donc la propriété de permettre un déplacement à la fois longitudinal et latéral du manchon de centrage ce qui permet, en particulier dans le cas d'accouplement simultané multivoies, d'éviter les contraintes entre les manchons de centrage et le manchon d'accouplement, ce qui permet un bon alignement des fibres.

La partie (B), qui peut être désignée, par voie de simplification, sous le nom de «partie femelle», représente un embout selon l'invention. Une monofibre 22, munie de sa gaine de protection 23, est logée, et fixée dans les mêmes conditions que pour la partie (A), dans le manchon cylindrique de centrage 24.

A la partie antérieure du manchon de centrage 24 débouche la face de contact 26 de la fibre, dont la mise en vis-à-vis avec la face de contact 6 de la fibre de l'embout (A) doit assurer la transmission optique après raccordement.

Le manchon de centrage 24 porte un manchon d'accouplement 27, en forme de tube, dont le diamètre intérieur de la partie libre en saillie 28 est choisi légérement inférieur au diamètre extérieur de l'embout de centrage 4.

Un mode de réalisation typique de ce manchon d'accouplement consiste, en adoptant un même diamètre extérieur pour les deux manchons de centrage 4 et 24 des parties (A) et (B), à le constituer d'un tube en matériau élastique, muni d'une fente longitudinale, et réalisant un serrage sur les manchons lorsqu'ils y sont introduits.

Le manchon de centrage 24 est fixé dans l'embout 21 par un moyen 29 en forme de disque, le manchon y étant maintenu longitudinalement par des épaulements s'appuyant sur les faces latérales de ce disque, portées respectivement par le manchon et l'embout.

De plus, un joint d'étanchéité, constitué par un anneau élastique 30 de forme torique, est disposé à l'extrémité opposée, ou postérieure, à la face d'entrée de l'embout, dans une gorge 31 portée par le manchon de centrage.

Selon l'invention, cet anneau élastique assume, en combinaison avec sa fonction de centre de pivotement angulaire du manchon de centrage 24, une fonction d'étanchéité.

En effet, si la position du manchon de centrage 24 est bien définie longitudinalement par le disque 29, il est indispensable que ce manchon soit doté de mobilité transversale, ainsi que son manchon d'accouplement 27, par rapport à l'embout 21, ainsi qu'on en a montré la nécessité plus haut dans les connecteurs multivoies, pour compenser les inévitables différences de position de chacun lors du raccordement.

Pour cela, l'invention prévoit de permettre le pivotement du manchon de centrage 24 autour du centre 51 situé sensiblement dans le plan médian de l'anneau torique, en ménageant un «jeu» 32 entre les surfaces cylindriques latérales, respectivement externes et internes, du disque 29 et de son logement dans l'embout; à titre d'ordre de grandeur typique, le pivotement choisi peut être de $\pm$ 1° par rapport à l'axe.

La figure 2 représente les deux parties (A) et (B), en position connectée.

Le raccordement s'étant effectué par rapprochement des parties (A) et (B), le manchon de centrage 4 a pénétré à frottement doux dans le manchon d'accouplement élastique 28 porté par le manchon de centrage 24. Simultanément, les manchons de centrage mâle 4 et femelle 24 ont mis leurs faces respectives de transmission optique 6 et 26 en contact, sous une pression mécanique exercée par la compression du ressort 8.

Cependant, il peut s'avérer nécessaire de limiter l'amplitude angulaire de pivotement du manchon d'accouplement 28, permise par les moyens 29 et 30, pour assurer dans tous les cas la pénétration simultanée de l'ensemble des manchons de centrage du connecteur multivoies.

Pour cela, l'invention prévoit l'insertion de chaque manchon de centrage 24, muni de son manchon d'accouplement 28, dans une gaine individuelle 40, de diamètre intérieur choisi pour définir une valeur maximale de l'angle de rotation, typiquement $\pm$ 1°. De plus, cette gaine comporte à son entrée 41 un cône de guidage 42, dont les diamètres externe et interne sont déterminés pour compenser les différences d'alignement des manchons de centrage, en particulier pour les connecteurs multivoies.

Enfin, on remarquera sur les figures 1 et 2 la présence d'un joint semi-sphérique 50 sur la partie sphérique duquel s'appuie le manchon d'accouplement 27 lors de son opération de rotation éventuelle autour du point de pivotement 51 de la rotule.

Ce joint 50 est muni d'un canal central dans lequel passe le manchon de centrage 24. La face sphérique de ce joint 50 a un rayon de courbure R dont le centre est le point de pivotement 51 de la rotule. La face pleine du joint 50 s'appuie sur deux épaulements 52 et 53 portés par l'embout (B). Au cours du raccordement de A et B, on évite ainsi les contraintes des manchons de centrage et d'accouplement l'un sur l'autre ce qui facilite le raccordement et l'auto-alignement des fibres.

La mise en œuvre de l'ensemble mâle-femelle selon l'invention a permis de vérifier la possibilité de raccordement de deux fibres optiques avec une atténuation inférieure ou égale à 0,5 dB au niveau de la connexion dans le cas du raccordement simultané de six voies optiques. Le manchon d'accouplement décrit ci-dessus est constitué d'un tube en matériau élastique, muni d'une fente longitudinale. De préférence toutefois, on utilisera un manchon tel que décrit dans la demande de brevet français No. 80 06 613 constitué d'une partie cylindrique en forme de tube, comportant une pluralité de mors de serrage longitudinaux, régulièrement répartis à la périphérie du tube. Pour plus de détails, on se rapporte à ladite demande de brevet citée ci-dessus.

## Revendications

1. Embout pour connecteur de fibres optiques portant au moins un manchon de centrage de forme sensiblement cylindrique, dans lequel une fibre optique est fixée, ledit manchon de centrage possédant à son extrémité antérieure une face de contact où débouche la fibre et à proximité de son extrémité postérieure des moyens de positionnement du manchon de centrage dans l'embout, ainsi que des moyens d'orientation du manchon de centrage, caractérisé en ce que lesdits moyens d'orientation du manchon de centrage sont constitués par un dispositif formant rotule (30, 31) disposée entre les moyens de positionnement (29) du manchon de centrage (24) et l'extrémité postérieure de l'embout (21), celui-ci permettant un pivotement du manchon (24) à l'intérieur dudit embout (21), autour du point de pivotement (51) du dispositif formant rotule.

2. Embout selon la revendication 1, caractérisé en ce que le dispositif formant rotule est constitué par une gorge (31) circulaire creusée dans le manchon de centrage coopérant avec un joint torique (30) logé dans celle-ci et s'appuyant sur le logement interne correspondant de l'embout.

3. Embout selon l'une des revendications 1 ou 2, caractérisé en ce que le joint torique (30) est élastique et assure l'étanchéité de l'embout.

4. Embout selon l'une des revendications 1 à 3, caractérisé en ce que les moyens de positionnement, disposés entre la rotule et l'extrémité antérieure, sont constitués par un disque muni d'un canal central, dont les surfaces de base extérieure et intérieure coopèrent respectivement avec des épaulements portés par l'embout de connecteur et le manchon de centrage qui y est logé, ledit disque étant fixé avec un jeu transversal dans l'embout, tout en assurant le blocage en translation.

5. Embout selon l'une des revendications 1 à 4, caractérisé en ce qu'il comporte également un manchon d'accouplement disposé sur le manchon de centrage.

6. Embout selon la revendication 5, caractérisé en ce que le manchon d'accouplement est maintenu dans l'embout par des pièces rapportées fixées à celui-ci.

7. Embout selon l'une des revendications 5 ou 6, caractérisé en ce qu'il comporte un joint semi-sphérique, muni d'un canal central, dont la face plane coopère avec des épaulements portés par l'embout et dont la face sphérique est au contact du manchon d'accouplement permettant une rotation aisée du manchon de centrage et du manchon d'accouplement sans provoquer de contrainte sur celui-ci.

8. Connecteur pour fibre optique constitué de deux embouts dont la réunion assure le raccordement d'au moins une voie optique, caractérisé en ce que l'un au moins des embouts est conforme à l'une des revendications 1 à 7.

9. Connecteur selon la revendication 8, caractérisé en ce que les manchons de centrage de chaque embout sont reliés deux à deux à l'aide d'un manchon d'accouplement.

10. Connecteur selon la revendication 9, caractérisé en ce que le manchon d'accouplement comporte une pluralité de mors de serrage longitudinaux régulièrement répartis autour de l'axe commun des fibres raccordées.

11. Connecteur selon l'une des revendications 8 à 10, caractérisé en ce que les manchons de centrage des deux embouts sont munis de moyens de positionnement angulaire autour de leur axe longitudinal.

12. Connecteur selon la revendication 11, caractérisé en ce que les moyens de positionnement angulaire sont constitués par un tenon porté par un manchon de centrage coopérant avec une rainure longitudinale portée par l'embout.

13. Connecteur selon l'une des revendications 8 à 12, caractérisé en ce que l'un au moins des embouts possède des moyens de positionnement longitudinal du manchon de centrage.

14. Connecteur selon la revendication 13, caractérisé en ce que les moyens de positionnement longitudinal comportent des moyens élastiques qui, après raccordement des deux embouts, permettent l'application d'une force d'appui entre les deux faces de contact respectives des manchons de centrage des deux embouts.

15. Connecteur selon l'une des revendications 8 à 14, caractérisé en ce que l'un des embouts comporte un manchon de centrage pouvant se déplacer longitudinalement grâce à un ressort s'appuyant d'une part sur une collerette solidaire dudit manchon, et d'autre part une bague solidaire de l'embout.

16. Connecteur selon la revendication 15, caractérisé en ce que ledit embout possède une ouverture à travers laquelle passe ledit manchon de centrage, ladite ouverture possédant un diamètre légèrement supérieur à celui du manchon de centrage et permettant ainsi un certain jeu latéral dudit manchon au cours de l'opération d'accouplement.

**Claims**

1. A socket for a connector of optical fibres, comprising at least one centering sleeve of substantially cylindrical form, wherein an optical fibre is fixed, said centering sleeve comprising at its front end a contact face where the fibre ends, and near its rear end means for positioning the centering sleeve in the socket, as well as means for orienting the centering sleeve, characterized in that said means for orienting the centering sleeve are comprised of an articulation device (30, 31) disposed between the means (29) for positioning the centering sleeve (24) and the rear end of the socket (21), which permits a pivoting of the sleeve (24) within the socket (21) about the pivot point (51) of the articulation device.

2. Socket according to claim 1, characterized in that the articulation device is comprised of a circular groove (31) formed in the centering sleeve and cooperating with an annular member (30) situated therein and engaging the corresponding internal seat of the socket.

3. Socket according to claim 1 or claim 2, characterized in that the annular member (30) is resilient and assures the sealing of the socket.

4. Socket according to any of claims 1 to 3, characterized in that the positioning means disposed between the articulation and the front end are comprised of a disc provided with a central passage, the disc having internal and external base surfaces cooperating, respectively, with shoulders of the socket of the connector and the centering sleeve disposed thereat, said disc being fixed within the socket with transverse play to prevent translational movements.

5. Socket according to any of claims 1 to 4, characterized in that it further comprises a coupling sleeve disposed on the centering sleeve.

6. Socket according to claim 5, characterized in that the coupling sleeve is maintained in the socket by inserted members fixed thereto.

7. Socket according to claim 5 or claim 6, characterized in that it comprises a semi-spherical joint provided with a central passage, the joint having a plane face cooperating with shoulders of the socket and a spherical face in contact with the coupling sleeve to permit an easy rotation of the centering sleeve and the coupling sleeve without generating stress thereon.

8. Optical fibre connector constituted by two sockets, the reunion of which assures the connection of at least one optical path, characterized in that at least one of the sockets is designed according to any of claims 1 to 7.

9. Connector according to claim 8, characterized in that the centering sleeves of each socket are connected two by two by means of a coupling sleeve.

10. Connector according to claim 9, characterized in that the coupling sleeve comprises a plurality of longitudinal clamping portions regularly spaced about the common axis of the connected fibres.

11. Connector according to any of claims 8 to 10, characterized in that the centering sleeve of two sockets are provided with means for angular positioning about their longitudinal axis.

12. Connector according to claim 11, characterized in that the angular positioning means are comprised of a key of the centering sleeve cooperating with a longitudinal groove of the socket.

13. Connector according to any of claims 8 to 12, characterized in that at least one of the sockets includes means for longitudinal positioning of the centering sleeve.

14. Connector according to claim 13, characterized in that the longitudinal positioning means comprise resilient means which, after the two sockets have been connected, permit the application of a force of engagement between the two respective contact faces of the centering sleeves of the two sockets.

15. Connector according to any of claims 8 to 14, characterized in that the one of the sockets comprises a centering sleeve adapted to be displaced longitudinally due to a spring supported on one side by a collar fixed to said sleeve, and on the other side against a ring fixed to the socket.

16. Connector according to claim 15, characterized in that said socket has an opening through which said centering sleeve passes, said opening having a diameter slightly superior to that of the centering sleeve such as to permit a certain lateral play of said sleeve during the coupling operation.

**Patentansprüche**

1. Anschlussteil für einen Lichtleitfaser-Verbinder mit mindestens einer Zentrierhülse von im wesentlichen zylindrischer Form, in der eine Lichtleitfaser befestigt ist, wobei die Zentrierhülse an ihrem vorderen Ende eine Kontaktfläche besitzt, an der die Faser mündet, und an ihrem hinteren Ende mit Positionierungsmitteln zum Positionieren der Zentrierhülse im Anschlussteil sowie mit Orientierungsmitteln zum Ausrichten der Zentrierhülse versehen ist, dadurch gekennzeichnet, dass die Orientierungsmittel aus einer ein Gelenk bildenden Vorrichtung (30, 31) bestehen, die zwischen den Positionierungsmitteln (29) und dem hinteren Ende des Anschlussteiles (21) angeordnet ist, wobei diese eine Schwenkbewegung der Zentrierhülse (24) im Inneren des Anschlussteiles (21) um den Schwenkpunkt (51) der ein Gelenk bildenden Vorrichtung erlaubt.

2. Anschlussteil nach Anspruch 1, dadurch gekennzeichnet, dass die ein Gelenk bildende Vorrichtung aus einer kreisförmigen, in die Zentrierhülse eingearbeiteten Nut (31) besteht, die mit einem Dichtring (30) zusammenwirkt, der in dieser angeordnet ist und an der entsprechenden inneren Aufnahme des Anschlussteiles anliegt.

3. Anschlussteil nach Anspruch 1 oder 2, dadurch gekennzeichnet, dass der Dichtring (30) elastisch ist und die Dichtheit des Anschlussteiles sicherstellt.

4. Anschlussteil nach einem der Ansprüche 1–3, dadurch gekennzeichnet, dass die Positionierungsmittel, die zwischen dem Gelenk und dem vorderen Ende angeordnet sind, von einer mit einem zentralen Kanal versehenen Scheibe gebildet werden, deren äussere und innere Grundflächen mit Schultern zusammenwirken, die von dem Anschlussteil des Verbinders bzw. der dort angeordneten Zentrierhülse gebildet werden, wobei diese Scheibe mit transversalem Spiel in dem Anschlussteil festgelegt ist, wodurch sie eine Sicherung gegen eine Translationsbewegung darstellt.

5. Anschlussteil nach einem der Ansprüche 1–4, dadurch gekennzeichnet, dass es ausserdem eine Kupplungshülse aufweist, die auf der Zentrierhülse angeordnet ist.

6. Anschlussteil nach Anspruch 5, dadurch gekennzeichnet, dass die Kupplungshülse in dem Anschlussteil durch eingefügte Teile gehalten wird, die an dieser befestigt sind.

7. Anschlussteil nach Anspruch 5 oder 6, dadurch gekennzeichnet, dass es eine mit einem zentralen Kanal versehene halbkugelförmige Gelenkverbindung aufweist, deren ebene Seite mit Schultern des Anschlussteiles zusammenwirkt und deren sphärische Seite mit der Kupplungshülse in Berührung steht, wodurch eine leichtgängige Drehung der Zentrierhülse und der Kupplungshülse ermöglicht wird, ohne eine Verspannung derselben hervorzurufen.

8. Lichtleitfaser-Verbinder, bestehend aus zwei Anschlussteilen, deren Verbindung den Anschluss mindestens einer Lichtleiterbahn bewirkt, dadurch gekennzeichnet, dass mindestens eines der Anschlussteile entsprechend einem der Ansprüche 1–7 ausgebildet ist.

9. Verbinder nach Anspruch 8, dadurch gekennzeichnet, dass die Zentrierhülsen jedes Anschlussteiles paarweise mit Hilfe einer Kupplungshülse verbunden sind.

10. Verbinder nach Anspruch 9, dadurch gekennzeichnet, dass die Kupplungshülse mehrere längsverlaufende Spannabschnitte aufweist, die um die gemeinsame Achse der miteinander verbundenen Lichtleitfasern gleichmässig verteilt angeordnet sind.

11. Anschlussteil nach einem der Ansprüche 8–10, dadurch gekennzeichnet, dass die Zentrierhülsen der beiden Anschlussteile mit Mitteln zur Winkelpositionierung um ihre Längsachse versehen sind.

12. Verbinder nach Anspruch 11, dadurch gekennzeichnet, dass die Mittel zur Winkelpositionierung aus einem von einer Zentrierhülse getragenen Vorsprung bestehen, der mit einer Längsnut des Anschlussteiles zusammenwirkt.

13. Verbinder nach einem der Ansprüche 8–12, dadurch gekennzeichnet, dass mindestens eines der Anschlussteile Mittel zur Längspositionierung der Zentrierhülse besitzt.

14. Verbinder nach Anspruch 13, dadurch gekennzeichnet, dass die Mittel zur Längspositionierung aus elastischen Mitteln bestehen, die nach Verbinden der beiden Anschlussteile dafür sorgen, dass zwischen den beiden entsprechenden Kontaktflächen der Zentrierhülsen der beiden Anschlussteile eine Andrückkraft aufgebracht wird.

15. Verbinder nach einem der Ansprüche 8–14, dadurch gekennzeichnet, dass das eine der Anschlussteile eine Zentrierhülse aufweist, die in Längsrichtung verschiebbar ist, und zwar aufgrund einer Feder, die einerseits an einem an der Hülse festgelegten Kragen und andererseits an einem am Anschlussteile festgelegten Ring abgestützt ist.

16. Verbinder nach Anspruch 15, dadurch gekennzeichnet, dass das Anschlussteil eine Öffnung aufweist, durch welche die Zentrierhülse hindurchpasst, wobei diese Öffnung einen Durchmesser hat, der geringfügig grösser ist als der der Zentrierhülse, und auf diese Weise ein gewisses laterales Spiel der Hülse während des Kupplungsvorganges ermöglicht.

# FIG_1

(B)                                                                    (A)

# FIG_2